# EUROPEAN PATENT APPLICATION

(11) **EP 4 831 915 A1**
(43) Date of publication of application: **28.10.2026**
(21) Application number: 26174077.3
(22) Date of filing: 22.04.2026
(51) Int. Cl.: G06T 7/00

(54) **AUTOMATED IDENTIFICATION AND CHARACTERIZATION OF WEAR MODES FOR GAS TURBINE ENGINE HARDWARE**

(30) Priority: 23.04.2025 US 202519187098
(71) Applicant: RTX Corporation, Farmington, CT 06032 (US)
(72) Inventor: MOHSENI, Hamidreza, Avon, 06001 (US)
(74) Representative: Dehns

(57) **Abstract**

A method for determining wear mode and surface characteristics of wear on a gas turbine engine component, comprising the steps of obtaining images of a wear scar on a gas turbine engine component; feeding the images to an image model; identifying geometry of the wear scar from the images and the image model; identifying a wear mode from the geometry of the wear scar; obtaining surface characterization of the wear scar; analyzing the surface characterization to identify tribo-layer details; identifying constituents of the tribo-layer from the tribo-layer details; and characterizing wear on the gas turbine engine component based upon the wear mode and the constituents of the tribo-layer. A system is also disclosed.

## Description

### FIELD

The present disclosure relates to evaluation of components for wear and, in one non-limiting embodiment, to a method for identifying and evaluating a wear mode for a component of an industrial machine such as a turbine engine.

### BACKGROUND

Investigation of gas turbine engine hardware has been the source of learning for identification and evaluation of one or more wear modes and/or underlying mechanisms responsible for friction and surface degradation over various engine operation cycles. The analysis of wear can be destructive, and can involve sectioning the hardware for surface and sub-surface investigation, or can be non-destructive. Whereas each approach requires different sample preparation and analysis strategies, one of the major short-comings of wear analysis is long lead-time for sample preparation, photo-documentation and analysis and characterization of wear mode. Methods are needed for wear mode identification, analysis and characterization with high potential for reduction in cost and lead-time.

### SUMMARY OF THE DISCLOSURE

The present disclosure, in one aspect, relates to a method for determining wear mode and surface characteristics of wear on a gas turbine engine component, which method comprises the steps of obtaining images of a wear scar on a gas turbine engine component; feeding the images to an image model; identifying geometry of the wear scar from the images and the image model; identifying a wear mode from the geometry of the wear scar; obtaining surface characterization of the wear scar; analyzing the surface characterization to identify tribo-layer details; identifying constituents of the tribo-layer from the tribo-layer details; and characterizing wear on the gas turbine engine component based upon the wear mode and the constituents of the tribo-layer.

In one non-limiting configuration, the method further comprises the step of estimating wear on the gas turbine engine component for an additional number of engine operation cycles based upon the wear mode and the constituents of the tribo-layer.

In another non-limiting configuration, the obtaining images step is conducted with an imaging tool, and wherein the obtaining surface characterization step is conducted with a laser tool.

In still another non-limiting configuration, the imaging tool comprises one or more of optical imaging apparatus, scanning electron micrography (SEM) apparatus and combinations thereof.

In a further non-limiting configuration, the step of identifying the geometry of the wear scar comprises evaluating at least two factors from the group consisting of shape, shape distribution, size, size distribution, population of wear scars on series of components, location, location distribution, wear depth, wear depth distribution, wear volume and wear volume distribution.

In a still further non-limiting configuration, the method further comprises classifying the wear mode based upon at least two characteristics selected from the group consisting of wear modes, relative percentage of each wear mode present, matching with other instances of wear from engine hardware, predicted boundary condition and cross-correlation with structure data.

In another non-limiting configuration, the step of obtaining surface characterization of the wear scar comprises obtaining a laser surface analysis of the wear scar.

In still another non-limiting configuration, the laser surface analysis comprises a Raman surface analysis.

In a further non-limiting configuration, the wear mode is selected from the group consisting of sliding wear, impact wear, rolling contact wear, non-wear surface damage and combinations thereof.

In a still further non-limiting configuration, the constituents of the tribo-layer are selected from the group consisting of metal oxides, glaze layer oxides, carbides, base metal/alloy/coating wear particles, nano-structured particles, severely deformed wear particles, possible contamination from environment and combinations thereof.

In another non-limiting configuration, the method further comprises adding at least one of the images and the wear mode and the surface characterization and the tribo-layer constituents to at least one database.

In still another non-limiting configuration, at least one of the wear geometry identification and the identification of the constituents of the tribo-layer are identified using the at least one database.

In another non-limiting aspect, a system for determining wear mode and surface characteristics of wear on a gas turbine engine component comprises an imaging tool for obtaining images of a wear scar on a gas turbine engine component; a characterization tool for obtaining surface characterization of the wear scar; a processor in communication with the characterization tool and the imaging tool for receiving the images, the processor being configured to identify geometry of the wear scar from the images and an image model, and to identify a wear mode from the geometry of the wear scar; the processor also being configured to analyze the surface characterization to identify tribo-layer details, and to identify constituents of the tribo-layer from the tribo-layer details, and to characterize wear on the gas turbine engine component based upon the wear mode and the constituents of the tribo-layer.

In one non-limiting configuration, the processor is further configured to estimate wear on the gas turbine engine component for an additional number of engine operation cycles based upon the wear mode and the constituents of the tribo-layer.

In another non-limiting configuration, the imaging tool comprises one or more of optical imaging apparatus, scanning electron micrography (SEM) apparatus and combinations thereof, and the characterization tool comprises a laser.

In still another non-limiting configuration, the processor is configured to identify the geometry of the wear scar based upon at least two factors from the group consisting of shape, shape distribution, size, size distribution, population of wear scars on series of components, location, location distribution, wear depth, wear depth distribution, wear volume and wear volume distribution.

In a further non-limiting configuration, the processor is configured to classify the wear mode based upon at least two characteristics selected from the group consisting of wear modes, relative percentage of each wear mode present, matching with other instances of wear from engine hardware, predicted boundary condition and cross-correlation with structure data.

In a still further non-limiting configuration, the processor is configured to identify the wear mode from the group of wear modes consisting of sliding wear, impact wear, rolling contact wear, non-wear surface damage and combinations thereof.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 schematically illustrates a system and method as disclosed herein;
FIG. 2 is a flow chart further illustrating a disclosed method; and
FIGS. 3-7 illustrate visual characteristics of different types of wear modes.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

This disclosure relates to a system and method for automating and enhancing the inspection of components such as gas turbine engine components for wear. Various gas turbine engine components experience wear during use, for example during engine operation cycles, and must be inspected periodically during their useful lifetimes. The wear can take place in many different forms or modes. For example, wear due to sliding is a different wear mode from wear due to impacts, as well as wear due to rolling contact and other types of surface damage. It is most helpful when wear is detected to be able to determine what wear mode caused the wear. In addition, these various types of wear lead to a wear scar which will typically have a tribo-layer or coating, and it can be very important to learn the constituents that form the tribo-layer. As set forth above, it is frequently either very time consuming, or requires destructive analysis, or both, to determine this information.

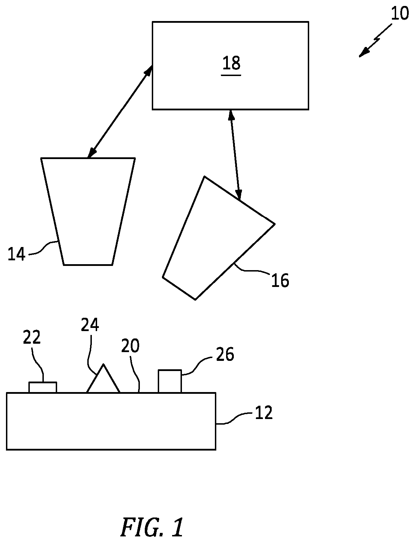

In one non-limiting embodiment, wear is analyzed in an automated manner using a system 10 as schematically illustrated in FIG. 1. FIG. 1 shows a typical component 12 which is being inspected by an imaging tool 14 as well as a characterization tool 16. Imaging tool 14 and characterization tool 16 can be connected with a control unit 18 as shown.

Imaging tool 14 is an optical apparatus such as a camera or the like that can obtain images of a surface 20 of component 12. Imaging tool 14 is capable of imaging at different levels of magnification and from various angles (capable of rotating 0-180 degrees over a surface of the wear scare) to capture a 3D profile of the wear scar surface. The images obtained by imaging tool 14 are fed to processor 18 which can be one or more processors coupled with one or more databases storing both data and software for analyzing the images obtained with tool 14. Processor 18 can re-construct the 3D image surface of the wear scar that helps in identifying the wear mode and severity of wear damage. This analysis is similar to a standard operation method for many non-contact optical profilometers which themselves may be known to persons skilled in the art.

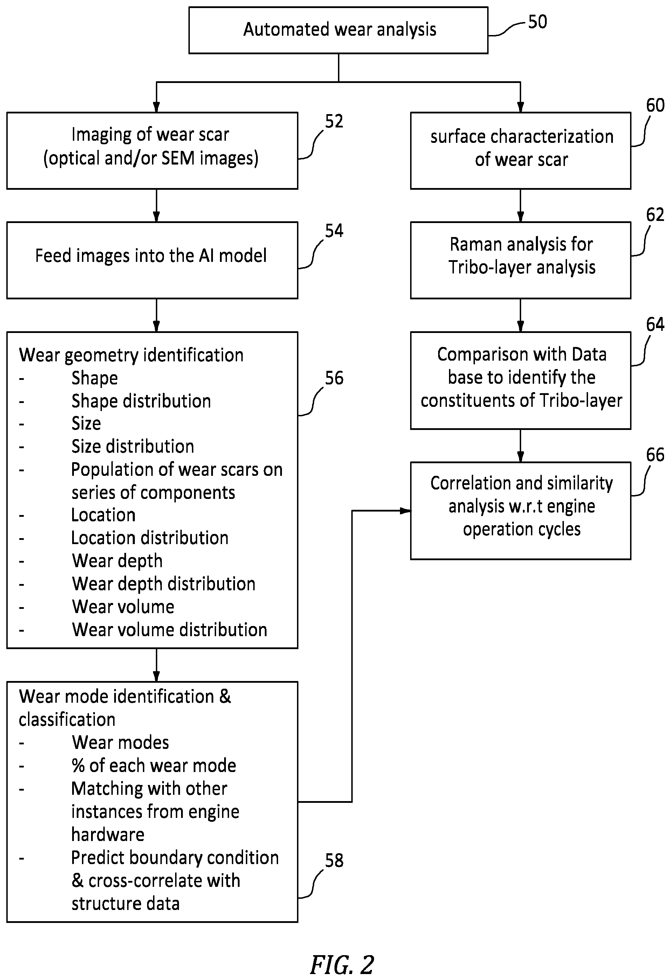

Processor 18 in one non-limiting configuration can include processing software to analyze images, with access to stored images of different types of wear scars, as a knowledge base to support an AI or similar analysis of the images obtained with imaging tool 14. This can follow a several step analysis, first identifying a geometric signature or shape of a wear scar on the component, and then using various aspects of the geometry or shape of the wear scar to determine wear mode and to classify the wear mode, in some instances storing the dataset from images through to wear mode and classification in a further database or other storage to enhance the knowledge base to which processor 18 has access for future analyses. The various steps in the process from obtaining images through to wear mode classification is further discussed below with respect to FIG. 2.

Staying with FIG. 1, the characterization tool 16 can be directed at a same portion of a surface of component 12 so as to obtain surface characterization data from the same surface for which imaging tool 14 collected images. Characterization tool 16 can be a tool which analyzes surface layers of a component, in this case the tribo-layer formed on component 12. Characterization tool 16 can be a laser tool that can be traversed across the wear scar to collect information that can also be cross-referenced in a suitable database such as what may be configured in processor 18 or in communication with processor 18. This information can be used to determine the constituents of the tribo-layer. It should be appreciated that while a laser is one disclosed embodiment, there are other characterization tools that can also be used depending on the dimensions of the engine component and whether the inspection is being done in situ.

Returning to the tribo-layer, in some configurations the tribo-layer can contain constituents selected from the group consisting of metal oxides, glaze layer oxides, carbides, base metal/alloy/coating wear particles, nano-structured particles, severely deformed wear particles, possible contamination from environment and combinations thereof. In other words, any by-product of tribo-chemical interaction of the two contacting bodies, that is, the component with the wear scar and the counterpart which contacts the component at the wear scar, and this can include various oxides such as metal oxides, glaze layer oxides, carbides, base metal/alloy/coating wear particles from either of the bodies in the pair (nano-structured particles, severely deformed wear particles), possible contamination from the environment, and the like. Identifying the constituents of the tribo-layer provides important information for use in evaluating the wear on the surface of the component.

The combination of wear mode determined from the images of imaging tool 14 and surface constituents data determined from the characterization of tool 16 results in a complete identification of wear mode and tribo-layer constituents which helps to evaluate the component for further use and to estimate the condition of the part after it has been used for additional engine cycles. Further, the final analysis results including the wear mode and tribo-layer constituents as well as the images and surface characterization data that led to them can be stored in one or more databases to expand the knowledge base and/or capability of the system to quickly and reliably identify conditions of future components being analyzed or inspected.

FIG. 2 is a flow chart that further illustrates and details the steps carried out by the system and method of this disclosure. An automated wear analysis 50 can be carried out following two substantially parallel processes. Step 52 represents obtaining images of the component with an imaging tool. The imaging tool can be an optical tool such as, for example, a camera or the like, or could alternatively be other equipment such as a scanning electron micrography (SEM) tool or the like. If engine hardware dimensions permit, the SEM can be preferred due to having higher magnification and resolution capabilities. However, for in-situ characterization of the components, for example components with complex geometry and size, optical imaging can be well suited to obtaining images as desired. This tool is used to obtain images of the area, or wear scar, of the component, several schematic representations of which are shown in FIG. 1 at 22, 24, 26. These wear scars are shown having different shapes only as a schematic representation of different types of wear mode, and it is not limiting upon a shape of the structures which can be formed on the surface of the component as a wear scar, or which can be imaged by imaging tool 14.

The images collected in step 52 can be transmitted or otherwise fed to a processor 18 or other data-based model or AI model, as represented in step 54. At the model, or elsewhere in processor 18 or in communication with processor 18, the images are compared to data stored in the model, or in a database to which the model has access, to determine and identify a wear geometry. This is shown in step 56, wherein the wear geometry can be characterized by shape, shape distribution, size, size distribution, population of wear scars on series of components, location, location distribution, wear depth, wear depth distribution, wear volume, wear volume distribution, and the like, or combinations thereof. In step 58, the shape or geometry as identified in step 56 is then used to identify the wear mode as shown, along with a classification of the identified wear mode which can be done by the wear mode itself, by the percentage of each of a number of different wear modes that are present, and through matching with other instances of the wear mode or similar data from the engine hardware. From all of this, a prediction of a boundary condition can be made and cross-correlated with structure data, all of which can be used in a final step discussed below.

Wear scars usually consist of several wear modes, and with the system and method disclosed herein, these wear modes can be ranked based on the percentage of each mode within the wear scar, such that, for example, major and minor wear modes can be identified and classified. The imaging and characterization tools, and processing unit (18), are capable of deconvoluting and segregating the wear scar into the potentially several different wear modes and then analyzing the severity of each wear mode (size, distribution, depth, distribution, etc.) present and cross-corelate with database and instances of similar wear modes that have been observed on engine hardware.

The processor tool can be programmed to work based on algorithms that helps deconvolute the wear scar into at least one or two, or more, different wear modes and to determine the population of each wear mode present and allocate a percentage to each mode. Next, processor 18 can be configured to identify the severity of each wear mode in terms of wear depth (max. and average) wear volume (max and average, size, distribution, all the wear geometry identification factors listed in step 56 and then cross-correlation of the wear scar analysis to the existing database or feeding these wear characteristics into a model or AI to created and train a model for automated identification and characterization.

Turning to the parallel branch of the method, a surface characterization is carried out in step 60, for example by traversing the wear scar with a laser or other similar characterization tool. The surface characterization collected in this way can then be evaluated, for example using Raman surface analysis (step 62), to analyze the tribo-layer. This analysis can be a direct indication of constituents of the tribo-layer, or more likely provides information that can be compared with data in a database (step 64) to identify the actual constituents of the tribo-layer. Then, in step 66, the wear mode and related classification data are fed to step 66 along with the identified constituents of the tribo-layer from step 64, to provide the desired outcome of the analysis in terms of the wear mode or modes that led to the wear scars, as well as the constituency of the wear scars.

For example, in one analysis the image analysis could determine that the wear mode is fretting, while the surface characterization could determine that the tribo-layer contains tungsten oxide. This information can be used to take well into account the conditions of the component, and to extrapolate out to additional engine cycles to estimate the useful life of the component.

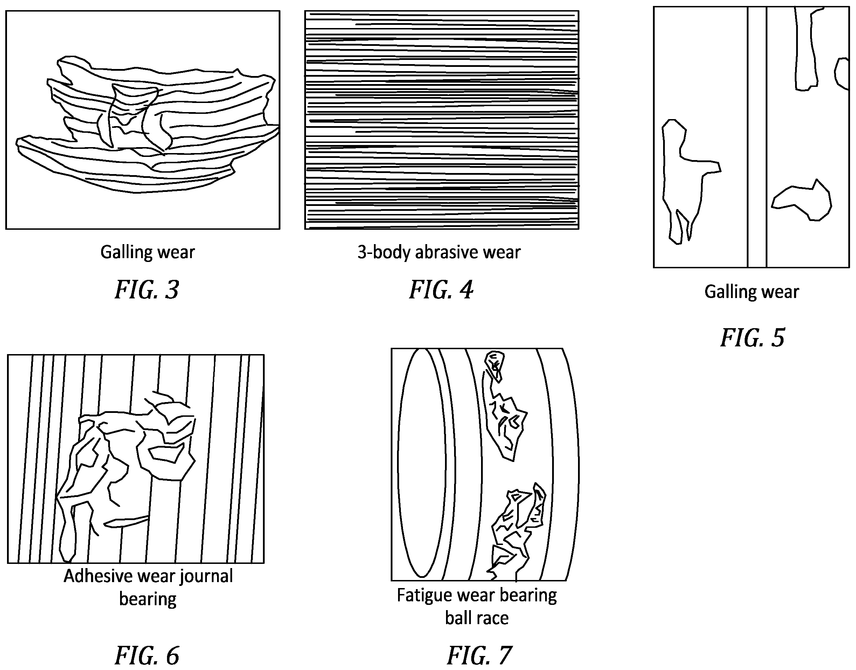

By way of further example, FIGS. 3-7 illustrate images of different types of wear modes that might be picked up by imaging tool 14 and identified as outlined herein.

FIG. 3 shows a typical wear pattern for a galling wear mode. FIG. 4 shows a typical wear pattern for a 2- and/or 3-body abrasive wear. FIG. 5 shows fretting wear and a steel bearing shell. FIG. 6 illustrates an adhesive wear on stainless steel journal bearing. Finally, FIG. 7 illustrates fatigue wear on a bearing steel ball race. Other indications can also be identified by the images.

A further presentation of different wear modes and their characteristics is presented below in Table 1:

**Table 1 Common types of wear and mechanical surface damage**

| **Category** | | **Characteristics** |
|---|---|---|
| **Sliding wear** | | **Tangential motion and traction between surfaces** |
| | **2 body abrasive wear** | **Wear by fixed hard particles moving along a surface** |
| | **3 body abrasive wear** | **Wear by hard particles passing between opposine bodies** |
| | **Adhesive wear** | **Wear arising from the localized adhesion of one surface to another, which results in plastic deformation and fracture with the transfer of detached material to the opposing surface** |
| | **Fretting wear** | **Wear arising from short-amplitude oscillations or tangential contact vibrations** |
| | **Fatigue wear** | **Wear involving the nucleation and propagation of surface and or subsurface cracks under cyclic tangential forces arising from sliding contact** |
| | **Polishing wear** | **Fine-scale wear by the action of hard particles, chcmomechanical processes. or both** |
| **Impact wear** | | **Normal forces acting cyclically on surfaces** |
| | **Single-body impact wear** | **Wear from the repeated impact of a second body** |
| | **Multibody impact wear** | **Wear from the repeated impact of particles, bubbles, droplets, or energy discharges. Examples include particle impingement erosion, cavitation erosion (wear by imploding bubbles), slurry erosion, and spark erosion.** |
| **Rolling contact wear** | | **Wear from the accumulation of surface damage during the cyclic stressing of one body rolling over or alone another** |
| **Surface damage other than wear (examples)** | | **Loss or displacement of material from a surface owing to mechanical contact in some form** |
| | **Chipping** | **Removal of material from a surface, generally involving brittle crack propagation and the production of shell-like features. Chipping commonly occurs at sharp corners or edges of brittle contact surfaces.** |
| | **Scuffing** | **Plastic deformation of surface material by rubbing, which generally produces a smooth appearance and is often localized in certain areas of the surface. Scuffing is sometimes referred to as *incipient galling.*** |
| | **Scratching** | **Production of one or more shallow grooves in a surface by a hard counter body moving tangentially along the surface** |
| | **Galling** | **A severe form of surface material displacement involving plastic deformation and the loss of fit between counter surfaces** |
| | **Gouging** | **A severe form of localized plastic deformation in which relatively deep, localized troughs are produced** |
| | **Scoring** | **Production of one or more deep scratches in a body generally involving plowing by a hard particle or protuberance on an opposing body** |
| | **False Brinelling** | **Production of clusters of craters similar in appearance to hardness indentations with a spherical indenter** |
| | **Frosting** | **The production of a dull appearance, typically on a bearing surface. due to a random pattern of fine scratches or gouges** |

The different types and sub-types of wear modes presented in Table 1 is not exhaustive, but does represent a good cross-section of wear modes that can be relevant for components of gas turbine engines.

It should be appreciated that the system and method of this disclosure can be used to eliminate the subjectivity and partiality of wear investigation by a human observer. In addition, capability for non-destructive evaluation of materials is provided. The system and method can be used to evaluate components with complex geometry as well. Further, as one of the intended benefits, there is a potential for substantial reduction in analysis cost and lead time.

Still further, one or more databases can be developed for wear analysis of engine components from various tribo-systems. The databases can be used for input to support design decisions for new component development and engineering changes, and the databases can also be used as input for wear prediction and reliability models specific to engine component and exclusive to subject tribosystem.

The combination of analyses allows for qualitative and quantitative analysis of wear, and supports quality control, materials and coatings selection and expedites materials technology development when matching hardware wear scar with benchtop testing is necessary.

The approach also allows for monitoring wear evolution versus engine cycle, supports design, quality and productivity, and can support repair strategy by identification of serviceable limit on a component.

Finally, generating a large database can provide for substantial successful implementation of artificial intelligence algorithms, there are numerous tribology and failure root cause analysis reports that can be used as input to start such databases or model(s).

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A method for determining wear mode and surface characteristics of wear (22; 24; 26) on a gas turbine engine component (12), comprising the steps of:
obtaining images of a wear scar (22; 24; 26) on a gas turbine engine component (12);
feeding the images to an image model;
identifying geometry of the wear scar (22; 24; 26) from the images and the image model;
identifying a wear mode from the geometry of the wear scar (22; 24; 26);
obtaining surface characterization of the wear scar (22; 24; 26);
analyzing the surface characterization to identify tribo-layer details;
identifying constituents of the tribo-layer from the tribo-layer details; and
characterizing wear (22; 24; 26) on the gas turbine engine component (12) based upon the wear mode and the constituents of the tribo-layer.

2. The method of claim 1, further comprising the step of estimating wear (22; 24; 26) on the gas turbine engine component (12) for an additional number of engine operation cycles based upon the wear mode and the constituents of the tribo-layer.

3. The method of claim 1 or 2, wherein the obtaining images step is conducted with an imaging tool (14), and wherein the obtaining surface characterization step is conducted with a laser tool (16), optionally wherein the imaging tool (14) comprises one or more of optical imaging apparatus, scanning electron micrography (SEM) apparatus and combinations thereof.

4. The method of any preceding claim, wherein the step of identifying the geometry of the wear scar (22; 24; 26) comprises evaluating at least two factors from the group consisting of shape, shape distribution, size, size distribution, population of wear scars (22; 24; 26) on series of components (12), location, location distribution, wear depth, wear depth distribution, wear volume and wear volume distribution.

5. The method of any preceding claim, further comprising classifying the wear mode based upon at least two characteristics selected from the group consisting of wear modes, relative percentage of each wear mode present, matching with other instances of wear from engine hardware, predicted boundary condition and cross-correlation with structure data.

6. The method of any preceding claim, wherein the step of obtaining surface characterization of the wear scar (22; 24; 26) comprises obtaining a laser surface analysis of the wear scar (22; 24; 26), optionally wherein the laser surface analysis comprises a Raman surface analysis.

7. The method of any preceding claim, wherein the wear mode is selected from the group consisting of sliding wear, impact wear, rolling contact wear, non-wear surface damage and combinations thereof.

8. The method of any preceding claim, wherein the constituents of the tribo-layer are selected from the group consisting of metal oxides, glaze layer oxides, carbides, base metal/alloy/coating wear particles, nano-structured particles, severely deformed wear particles, possible contamination from environment and combinations thereof.

9. The method of any preceding claim, further comprising the steps of adding at least one of the images and the wear mode and the surface characterization and the tribo-layer constituents to at least one database.

10. The method of claim 9, wherein at least one of the wear geometry identification and the identification of the constituents of the tribo-layer are identified using the at least one database.

11. A system (10) for determining wear mode and surface characteristics of wear on a gas turbine engine component (12), comprising:
an imaging tool (14) for obtaining images of a wear scar (22; 24; 26) on a gas turbine engine component (12);
a characterization tool (16) for obtaining surface characterization of the wear scar (22; 24; 26);
a processor (18) in communication with the characterization tool (16) and the imaging tool (14) for receiving the images, the processor (18) being configured to identify geometry of the wear scar (22; 24; 26) from the images and an image model, and to identify a wear mode from the geometry of the wear scar (22; 24; 26);
the processor (18) also being configured to analyze the surface characterization to identify tribo-layer details, and to identify constituents of the tribo-layer from the tribo-layer details, and to characterize wear on the gas turbine engine component (12) based upon the wear mode and the constituents of the tribo-layer.

12. The system of claim 11, wherein the processor (18) is further configured to estimate wear (22; 24; 26) on the gas turbine engine component (12) for an additional number of engine operation cycles based upon the wear mode and the constituents of the tribo-layer.

13. The system of claim 11 or 12, wherein the imaging tool (14) comprises one or more of optical imaging apparatus, scanning electron micrography (SEM) apparatus and combinations thereof, and wherein the characterization tool (16) comprises a laser.

14. The system of any of claims 11 to 13, wherein the processor (18) is configured to identify the geometry of the wear scar (22; 24; 26) based upon at least two factors from the group consisting of shape, shape distribution, size, size distribution, population of wear scars (22; 24; 26) on series of components (12), location, location distribution, wear depth, wear depth distribution, wear volume and wear volume distribution.

15. The system of any of claims 11 to 14, wherein:
the processor (18) is configured to classify the wear mode based upon at least two characteristics selected from the group consisting of wear modes, relative percentage of each wear mode present, matching with other instances of wear from engine hardware, predicted boundary condition and cross-correlation with structure data; and/or
the processor (18) is configured to identify the wear mode from the group of wear modes consisting of sliding wear, impact wear, rolling contact wear, non-wear surface damage and combinations thereof.
